# FASCICULE DE BREVET EUROPEEN

(11) **EP 3 158 719 B1**
(45) Date de publication et mention de la délivrance du brevet: **15.08.2018**
(21) Numéro de dépôt: 15731282.8
(22) Date de dépôt: 18.06.2015
(51) Int. Cl.: H04M 3/42, H04M 3/436, H04L 29/06

(54) **PROCEDE ET SYSTEME DE FILTRAGE D'APPELS TELEPHONIQUES ENTRANTS INDESIRABLES**
VERFAHREN UND SYSTEM ZUM FILTERN UNERWÜNSCHTER EINGEHENDER ANRUFE
METHOD AND SYSTEM FOR FILTERING UNDESIRABLE INCOMING TELEPHONE CALLS

(30) Priorité: 18.06.2014 CH 925142014
(43) Date de publication de la demande: 26.04.2017
(73) Titulaire: Katia SA, 1920 Martigny (CH)
(72) Inventeur: WINKLER, Maxime, CH-1920 Martigny (CH)
(74) Mandataire: P&TS SA (AG, Ltd.)
(86) Numéro de dépôt international: PCT/EP2015/063689
(87) Numéro de publication internationale: WO 2015/193422

(56) Documents cités:
- EP-A1- 1 564 722
- EP-A1- 2 306 695
- GB-A- 2 474 439
- US-A1- 2013 100 238

## Description

### Domaine technique

L'invention concerne un procédé et un système de filtrage d'appels téléphoniques entrants indésirables, notamment un procédé et un système pour détecter et prévenir les appels indésirables et criminels.

### Etat de la technique

Les systèmes de communication téléphonique d'aujourd'hui permettent de perpétrer facilement des appels indésirables, souvent en toute impunité. Par exemple, de nombreux abonnés se plaignent de recevoir des appels provenant de campagnes de publicité ou de sondages d'opinions. Plus grave, certains appels peuvent même être criminels, par exemple en cas de harcèlement, d'arnaque téléphonique, d'escroquerie, ou d'appel pédophile par exemple.

De nombreuses solutions existent dans l'état de la technique pour bloquer des appels téléphoniques indésirables.

US2008292085A décrit un appareil qui permet de bloquer les appels téléphoniques provenant d'un numéro figurant sur une liste noire. L'appelé a la possibilité d'ajouter des numéros dans sa liste. Cet appareil ne fournit cependant aucune protection contre les appels indésirables provenant d'un numéro hors de la liste noire, par exemple les appels provenant d'une cabine, ou ceux dont le numéro d'appelant a été falsifié.

GB200614708A décrit un dispositif de filtrage d'appels entrants qui permet à l'utilisateur de programmer les numéros d'appelants autorisés et de bloquer les autres appels. Les utilisateurs qui ne figurent pas sur cette liste peuvent entrer un code NIP pour être autorisés à appeler. Ce dispositif offre une protection efficace, mais risque de créer un nombre important de « faux positifs », c'est-à-dire d'appels bloqués à tort bien qu'ils ne soient pas indésirables. En outre, l'obligation d'introduire un code NIP est contraignant pour les appelants de bonne foi.

US2004131164 décrit un appareil qui permet de dévier vers un répondeur les appels lorsque l'identifiant d'appelant figure sur une liste.

US8472599 décrit un dispositif qui permet de rejeter automatiquement les appels entrants lorsque l'identificateur d'appel ne peut pas être déterminé.

US2002018546A décrit un dispositif de filtrage d'appel qui peut être programmé pour définir des règles différentes selon l'heure de la journée ou pour différents appelants.

US2004086101A décrit un système de filtrage d'appels téléphoniques adapté notamment à des fax.

EP0559047 décrit un appareil de filtrage d'appels téléphonique qui peut être employé avec un récepteur téléphonique.

US8548149 décrit un répondeur téléphonique capable de détecter les appels indésirables, en se basant notamment sur des motifs d'appels et sur des listes noires d'appelants indésirables.

WO11014103 décrit un système de télécommunication capable de filtrer les appels au niveau d'un central téléphonique. Les appelants peuvent être identifiés au moyen d'un code d'identification.

JP2011010078 décrit un autre dispositif de filtrage d'appels indésirable qui se base sur des listes noires d'appelants indésirables.

US2010278325A décrit une méthode qui permet de prédire si un appel entrant va ennuyer l'appelé, et pour empêcher un tel appel. La prédiction se base sur les caractéristiques temporelles des appels précédents de l'appelant.

EP2153637 décrit une méthode pour détecter des campagnes d'appels téléphoniques indésirables, en analysant par exemple le nombre d'appels émis depuis chaque numéro. Cette méthode est difficile ou impossible à appliquer depuis un emplacement d'abonné.

WO07144310A1 décrit un système de gestion d'appels entrants qui emploie une liste noire, une liste blanche, et une liste grise d'appelants.

JP2007336001 décrit une méthode qui permet d'interrompre un appel indésirable en détériorant progressivement la qualité de l'appel.

WO07134810 décrit un procédé permettant de déterminer la probabilité qu'un appel entrant soit indésirable, en se basant sur l'heure d'arrivée de l'appel.

WO07118851 décrit une méthode impliquant la création d'une liste noire d'appelants ayant effectué au moins un appel indésirable.

US2009238345A décrit un système permettant de bloquer des appels indésirables avant même la première sonnerie.

US2009238345A décrit un dispositif qui permet d'ajouter un numéro de téléphone dans une liste noire ou dans une liste blanche.

US5930700 décrit un système de gestion de listes noires et blanches depuis un PDA.

US2013/100238 décrit un système pour l'acheminement des appels basé uniquement sur le contenu du flux vidéo.

La plupart de ces solutions connues se basent donc avant tout sur l'identification d'appelant, ou parfois sur d'autres paramètres comme l'heure d'appel. Aucun de ces critères n'offre cependant une sécurité suffisante.

En effet, à l'heure actuelle, une personne peut, sans autre, appeler une autre personne sans pour autant être autorisée, identifiée ou même authentifiée. Par exemple, la plupart des opérateurs permettent de masquer le numéro d'appelant. N'importe qui peut aussi utiliser une cabine téléphonique publique ou plus simplement effectué un appel par VoIP (ex : Skype) terminé sur le réseau afin de ne pas révéler son identité. Il est en outre possible de modifier simplement le numéro d'appelant ; de nombreux centraux téléphoniques privés offrent cette possibilité.

Par conséquent, les numéros téléphoniques qui s'affichent sont parfois fantaisistes, ou masqués, et n'aident pas vraiment les appelés à prendre la bonne décision avant de décrocher. Certains spammeurs téléphoniques utilisent même des numéros d'appelants correspondant à des organismes gouvernementaux dont les appels ne doivent en aucun cas, ou ne peuvent légalement, être bloqués.

On connait certes dans l'état de la technique des méthodes d'identification d'appelant qui sont basées sur une analyse vocale, plutôt que sur le numéro d'appelant. A titre d'exemple, EP1564722 décrit un procédé de routage et de dépistage d'appels téléphoniques basé sur la voix et sur le numéro d'appelant. Ce procédé permet un acheminement plus efficace des appels dans un centre d'appel, grâce à une reconnaissance améliorée de l'appelant.

La reconnaissance vocale de l'appelant a aussi été utilisée pour le filtrage d'appel indésirable. GB2474439 concerne un appareil pour traiter des appels téléphoniques entrants afin de les acheminer vers l'appelé ou de les rejeter. La décision est prise sur la base d'une identification d'appelant basée par exemple sur un ID, PIN, reconnaissance vocale, ou sur des informations biométriques. Le document ne décrit cependant pas sur quel extrait vocal se base la reconnaissance vocale.

L'identification par analyse vocale doit précéder l'établissement de la connexion vers l'appelé, et rallonge ainsi la phase d'établissement de l'appel. Pour cette raison, cette analyse relativement intrusive est tout au plus mise en oeuvre dans des systèmes d'acheminements pour centrales d'appel (comme dans EP1564722), puisque dans ces systèmes l'appelant est de toute manière généralement invité à parler pour guider l'acheminement. Contraindre tous les appelants à parler avant l'établissement de la connexion serait en revanche considéré comme inacceptable et intrusif dans d'autres situations.

EP2306695 décrit un procédé permettant d'identifier un appelant dans un réseau de télécommunication, au niveau d'un noeud de contrôle des appels. Si l'appelant fait partie de la liste de contacts connus, alors l'appel est traité comme un appel normal et sinon on passe à une seconde vérification en réalisant un échantillonnage de la voix de l'appelant. Cet échantillon est ensuite comparé aux échantillons de voix disponibles et l'appel est rejeté s'il n'y a pas de correspondance et ce sans connexion entre l'appelant et l'appelé. Cependant, même si cette comparaison résulte en une correspondance entre le nouvel échantillon et les échantillons disponibles, cela pourrait résulter éventuellement d'une erreur. De plus, dans ce cas de correspondance, on ne prend pas en compte le cas dans lequel une première personne appelante établisse l'appel en direction de l'appelé, puis qu'une deuxième personne appelante prenne le relais lorsque l'appel est transmis. Il en résulte un nombre non négligeable de cas où l'appel est transmis alors qu'il ne le devrait pas.

### Bref résumé de l'invention

Un but de la présente invention est de proposer un procédé et une méthode qui permettent de résoudre ou en tout cas de réduire les problèmes décrits ci-dessus.

En particulier, un but de la présente invention est de contrôler plus efficacement les accès téléphoniques entrants pour filtrer efficacement les appels non désirés.

Un but de la présente invention est de proposer un procédé qui soit transparent et moins intrusif pour les appelants habilités et habitués à communiquer avec un usager donner.

Selon l'invention, ces buts sont atteints notamment au moyen d'un procédé de filtrage d'appels téléphoniques entrants indésirables, dans lequel une décision de bloquer un appel ou de le transmettre est basée à la fois sur le numéro d'appelant et sur une analyse de la voix de l'appelant, le procédé comportant les étapes suivantes :
a) détermination du numéro d'appelant;
b) en fonction du numéro d'appelant, un système de filtrage décide soit de transmettre l'appel, soit de rejeter l'appel, soit d'inviter l'appelant à parler ;
e) lorsque l'appelant est invité à parler, il parle sans que son message vocal ne soit restitué à l'appelé ;
f) le système de filtrage analyse la voix de l'appelant;
l) le système de filtrage décide en fonction de cette analyse si l'appel doit être transmis à l'appelé, ou s'il doit être bloqué.

Ce procédé utilise donc au moins deux indicateurs, l'un sur le numéro d'appelant et l'autre qui modélise l'appelant lui-même grâce à une analyse de sa voix.

Ce procédé permet donc de bloquer immédiatement les appels entrants qui peuvent avec une certitude quasi absolue être qualifiés comme indésirables ; ce blocage peut même être effectué sans que la sonnerie du téléphone appelé ne sonne.

A l'inverse, le procédé est transparent pour les appels dont on peut, notamment sur la base du numéro d'appelant, exclure qu'il s'agisse de spam téléphonique.

Entre les deux, une procédure spéciale est mise en place pour les appels qui ne peuvent pas facilement être classifiés comme indésirables ou comme souhaitables ; dans cette zone grise, l'appelant est invité par le système à parler au système afin d'analyser sa voix et de déterminer, sur la base de cette voix, si l'appel doit être transmis ou non. Le message vocal de l'appelant n'est de préférence pas transmis à l'appelé durant cette phase de test ; il est même possible d'analyser automatiquement la voix de l'appelant avant que le téléphone de l'appelé ne sonne.

Ce procédé permet ainsi d'empêcher les appels de nature criminelle avant même que ceux-ci n'atteignent leurs victimes.

Le procédé peut comprendre une analyse sémantique de la conversation, la décision de transmettre un appel ou la décision de bloquer un appel dépendant de cette analyse sémantique.

Dans un mode de réalisation, un score décrit la confiance que le système attribue à un identifiant d'appel tandis qu'une deuxième mesure vérifie que c'est bien la bonne personne qui est en ligne en vérifiant l'empreinte biométrique, par exemple l'empreinte vocale, l'empreinte faciale, l'empreinte multimodale (voix plus visage), et éventuellement l'empreinte sémantique de l'appelant.

L'analyse du numéro d'appelant peut par exemple employer des listes noires, des listes blanches et/ou des listes grises d'appelant. Ces listes peuvent propres à chaque appelés : un appelant donné sera en effet peut-être indésirable pour certains appelés mais pas pour d'autres. D'autres listes noires, blanches et/ou grises peuvent aussi être partagées entre plusieurs appelés, par exemple en les stockant de manière centralisée dans un serveur partagé.

Des mécanismes de synchronisation peuvent être mis en place pour synchroniser les listes partagées avec les listes individuelles. Dans un mode de réalisation, un appelant est mis sur une liste noire, respectivement blanche ou grise, partagée dès qu'un nombre et/ou un pourcentage donné d'appelés l'ont classé ainsi.

L'analyse du numéro d'appelant peut aussi se baser sur la plausibilité du numéro d'appelant, afin par exemple de bloquer les numéros d'appelants inexistants ou dont le format (par exemple le nombre de chiffres, l'indicatif, etc.) ne correspond pas à une structure de numéro existante.

L'analyse du numéro d'appelant peut aussi se baser sur l'origine géographique associée à l'indicatif du numéro d'appelant transmis; pour un appelé donné, les appels provenant de l'étranger, ou d'une région ou pays autre que ceux avec lesquels il a l'habitude de communiquer, peuvent être bloqués ou générer une invitation à parler avant que l'appel ne soit transmis.

L'analyse vocale de la voix des appelants permet par exemple d'identifier la personne en ligne et de la reconnaitre sur la base de son empreinte vocale. Ainsi, un spammeur téléphonique connu (par exemple un employé d'un call center) peut être reconnu sur la base de son empreinte vocale même s'il emploie différents numéros d'appelants. Les empreintes vocales des appelants indésirables peuvent être partagées entre plusieurs appelés.

L'analyse vocale permet aussi d'authentifier l'appelant et de vérifier qu'il correspond au numéro d'appelant transmis, lorsque la ou les empreintes associées à ce numéro d'appelant sont connus, par exemple sur la base d'appels précédents.

L'analyse vocale permet aussi de classer l'appelant dans un groupe parmi plusieurs groupes, par exemple dans un groupe « bloqué », « admis », etc.

Un algorithme de reconnaissance de parole et une analyse sémantique peuvent être mis en oeuvre pour classer les appelés et pour rejeter des appels indésirables ou accepter des appels souhaitables. Par exemple, certains termes ou expressions fréquemment employé par des importuns, ou par un appelant spécifique, peuvent contribuer à déclencher une décision de blocage ou d'acceptation.

L'algorithme de reconnaissance de parole peut aussi comparer les paroles de l'appelant avec des données endogènes (par exemple des contenus de dialogues précédents avec cet appelant connus du système) ou exogènes (par exemple des données sur un réseau social de l'appelant ou de l'appelé). Cette comparaison peut être utilisée pour classifier l'appelant et/ou pour l'authentifier.

Le système de filtrage utilise donc une identification de l'appelant grâce à sa voix. Il peut aussi utiliser d'autres informations extraites du signal sonore reçu, y compris la détection de bips ou de signaux sonores émis lors des appels de quelques centraux d'appels ; la détection de musique en arrière-plan, y compris la détection de morceaux particuliers ; la reconnaissance et classification du bruit de fond ; la détection automatique de voix synthétique ; la détection d'extraits audio déjà connus ; la reconnaissance sémantique du texte parlé ; etc. En combinant plusieurs de ces paramètres, on parvient à déterminer une probabilité ou un score de détection d'appel indésirable.

Selon la présente invention, le système de filtrage continue d'analyser la voix de l'appelant après que l'appel ait été transmis à l'appelé. Cette analyse permet par exemple de préciser la signature vocale des appelants autorisés dont l'appel a été transmis, afin de mieux les reconnaitre dans le futur. Il est aussi possible de bloquer l'appel ou de proposer de le bloquer lorsque cette analyse révèle, après l'établissement de l'appel avec l'appelé, qu'il est indésirable, par exemple s'il provient d'un importun reconnu tardivement dans la discussion, ou lorsque l'analyse sémantique de ses paroles révèle un contenu inacceptable.

Un score de confiance peut être attribué à l'appel en fonction du numéro d'appelant, la décision de rejeter l'appel ou d'inviter l'appelant à parler étant prise au cours de l'étape b lorsque ce score est en-dessous d'un seuil prédéterminé.

Ce score de confiance attribué à un appelant est déterminé indépendamment pour chaque appelé. Un numéro d'appelant très connu d'un appelé donné, et ayant souvent téléphoné avec lui, générera par exemple un score de confiance plus élevé qu'un numéro d'appelant inédit pour cet appelé. Ce score de confiance individuel peut aussi dépendre des listes blanches, noires ou grises individuelles propres à chaque appelé ainsi que des listes partagées.

Un deuxième score de confiance peut aussi être attribué à l'appel en fonction de l'analyse biométrique, par exemple vocale, faciale, vocale plus faciale, et/ou sémantique. Ce deuxième score de confiance peut être combiné au premier score de confiance.

Le score de confiance, et la décision de rejeter l'appel ou d'inviter l'appelant à parler peut dépendre de l'historique des appels effectués avec ledit numéro d'appelant vers d'autres appelés. Par exemple, un numéro d'appelant notoirement associé à des appels importuns peut être mentionné dans des listes noires de numéros qui peuvent être partagées, ou à l'inverse un numéro d'agence gouvernementale peut figurer sur des listes blanches partagées. Par ailleurs, un numéro d'appelant associé à un très grand nombre d'appels provient peut-être d'un call center, auquel un score de confiance plus bas sera probablement attribué.

Le procédé peut comprendre une étape d'identification de l'appelant grâce à l'analyse biométrique, le score de confiance dépendant de l'historique des appels effectués par l'appelant ainsi identifié vers d'autres appelés. Par exemple, un appelant notoirement associé à des appels importuns peut être mentionné dans des listes noires d'appelant qui peuvent être partagées. Par ailleurs, un appelant associé à un très grand nombre d'appels travaille peut-être dans un call center, auquel un score de confiance plus bas sera probablement attribué

L'appelé peut de préférence signaler un appel indésirable, par exemple au moyen d'un bouton sur un appareil, d'une commande vocale ou via un site web. Cette indication peut par exemple être effectuée pendant l'appel, ou après cet appel. Le numéro d'appelant peut ensuite être mis dans une liste noire de l'appelé, ou associé à un score de confiance plus bas qu'à l'origine. De la même façon, l'empreinte biométrique, par exemple vocale et/ou faciale, de l'appelant peut être mise dans une liste noire de l'appelé, ou associée à un score de confiance plus bas qu'à l'origine. Cette décision peut aussi être utilisée dans la décision de rejeter les futurs appels de l'appelant vers d'autres appelés, ou d'inviter cet appelant à parler.

Le procédé peut employer une modélisation des appelants autorisés, et une autre modélisation des appelants non autorisés. Cette modélisation peut se baser à la fois sur le numéro d'appelant et sur l'analyse biométrique de l'appelant. Elle peut être individuelle pour chaque appelé. Par exemple, un modèle d'appelant autorisé pour un appelé donné peut contenir les appelants habituels de cet appelé, alors qu'un modèle d'appelant non autorisé peut contenir les appelants sur une liste noire ainsi que ceux dont le numéro d'appelant ou l'analyse vocale trahissent un appel depuis un call center à l'étranger. La modélisation des appelants peut aussi être collective et identique pour tous les appelés.

La décision d'accepter un appel puis de le transmettre peut être prise lorsque les paramètres de cet appel se rapprochent suffisamment du modèle d'appelant autorisé. La décision de bloquer un appel sera prise lorsque prise lorsque les paramètres de cet appel se rapprochent suffisamment du modèle d'appelant non autorisé.

Un algorithme de type machine learning peut être mise en place pour classer les appels entrants dans la catégorie des appels autorisés ou non autorisés.

### Brève description des figures

Des exemples de mise en oeuvre de l'invention sont indiqués dans la description illustrée par les figures annexées dans lesquelles :
- La figure 1 illustre un réseau de télécommunications incluant un système de filtrage selon un premier mode de réalisation de l'invention.
- La figure 2 illustre un réseau de télécommunications incluant un système de filtrage selon un deuxième mode de réalisation de l'invention.
- La figure 3 illustre un réseau de télécommunications incluant un système de filtrage selon un troisième mode de réalisation de l'invention.
- La figure 4 illustre un réseau de télécommunications incluant un système de filtrage selon un quatrième mode de réalisation de l'invention.
- La figure 5 est un diagramme de flux illustrant un exemple de procédé selon l'invention.

### Exemple(s) de mode de réalisation de l'invention

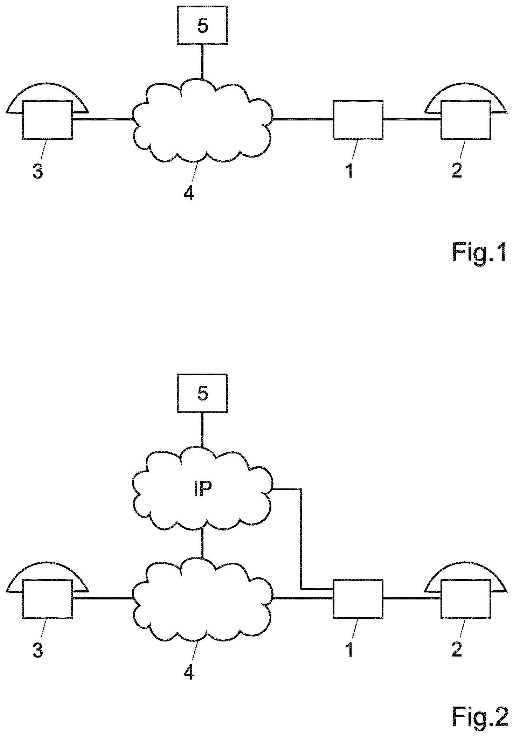

Les figures 1 à 4 illustrent quatre variantes de système de filtrage dans un réseau de télécommunications.

Dans l'exemple de la figure 1, le réseau de télécommunications comporte un réseau téléphonique 4, par exemple un réseau analogique (POTS), ISDN, cellulaire, de type VoIP, et/ou une combinaison entre plusieurs de ces réseaux. La référence 3 correspond à un dispositif terminal d'un appelant désirant établir un appel téléphonique avec un dispositif terminal d'un appelé 2 au travers de ce réseau téléphonique 4. Le système de filtrage 1, 5 inclut dans ce cas un module 1 sous la forme d'un boîtier branché entre le dispositif terminal d'appelé 2 et le réseau téléphonique 4, par exemple sur la prise téléphonique du terminal. Les fonctionnalités du module 1 peuvent aussi être réalisées par logiciel. Dans un mode de réalisation, ce module est intégré au dispositif terminal d'appelé 2, par exemple sous la forme de firmware ou d'une application, par exemple d'une application exécutée par-dessus un système d'exploitation dans le cas d'un dispositif terminal sous la forme d'un téléphone cellulaire, d'une tablette ou d'un ordinateur notamment. Le module 1 peut contenir un processeur ainsi qu'une base de données personnelle de numéros d'appelants, une base de données personnelle d'appelants et une base de données personnelle d'empreintes biométriques des appelants, par exemple d'empreintes vocales et/ou faciales. Les bases de données de numéros d'appelants et d'appelants indiquent par exemple quels numéros et quels appelants figurent sur des listes noires, blanches ou grises.

Le système de filtrage 1, 5 inclut en outre un serveur 5 accessible depuis le réseau téléphonique 4 et contenant un processeur ainsi qu'une base de données partagée de numéros d'appelants 50, une base de données partagée d'appelants 51 et une base de données partagée d'empreintes biométriques 52 des appelants, par exemple d'empreintes vocales et/ou faciales. Les bases de données de numéros d'appelants et d'appelants indiquent par exemple quels numéros et quels appelants figurent sur des listes noires, blanches ou grises.

Le serveur 5 peut aussi contenir des historiques d'appels passés par différents appelants et/ou à différents appelés, des signatures vocales et/ou biométriques et/ou sémantiques d'appelants, etc.

Le serveur 5 peut aussi être réalisé sous la forme d'un serveur virtuel ou d'un groupe de serveurs interconnectés, par exemple dans le cloud. D'autres organisations peuvent être imaginées.

Le boîtier de filtrage 1 peut se connecter à ce serveur 5 par exemple au moyen d'un modem intégré 10 permettant d'établir une communication de données avec ce serveur, par exemple pendant un intervalle sans dialogue ou dans une bande de fréquence non utilisée pour la communication vocale.

La configuration de la figure 1 offre un confort d'installation maximal et évite aux appelé la tâche de devoir configurer une connexion internet ; elle est aussi appropriée lorsqu'il n'y a pas de connexion internet disponible. Typiquement, tous les téléphones fixes et mobiles peuvent ainsi être utilisés par l'invention. Dans ce cas une partie seulement de l'information est communiquée par la ligne téléphonique ou par la connexion voix du téléphone mobile ; typiquement la voix de l'auteur présumé d'un appel abusif. La grande partie du traitement de la modélisation des locuteurs est effectuée sur le dispositif 1 lui-même. La modélisation spam elle aussi s'effectue directement sur le dispositif 1.

Dans l'exemple de la figure 2, le boîtier 1 est connecté au serveur 5 au travers du réseau Internet IP, par exemple au travers d'une interface Internet du boîtier 1. Les autres éléments peuvent être identiques aux éléments correspondants de la figure 1. La connexion IP élargit les possibilités d'utilisation et améliore l'ergonomie d'utilisation. Il est par exemple possible de configurer le système de filtrage via un serveur Web, de stocker des paramètres dans le serveur 5 (ou dans un cloud), et de partager des informations avec d'autres utilisateurs.

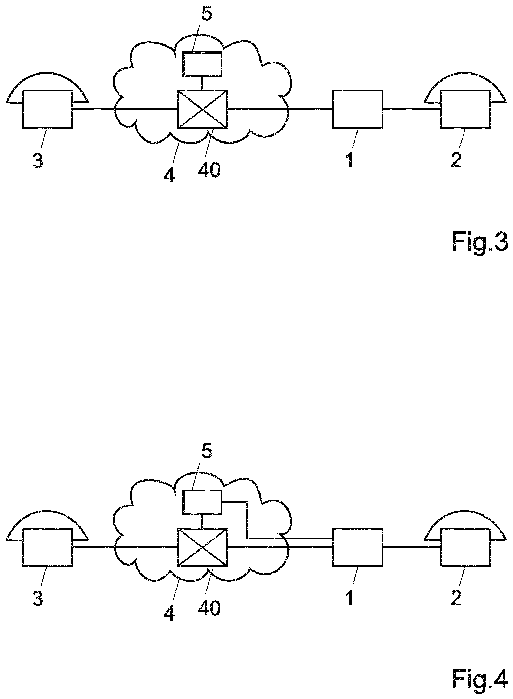

Dans l'exemple de la figure 3, le système de filtrage 5 est entièrement intégré dans le réseau téléphonique 40, par exemple sous la forme d'un module software et/ou hardware 5 qui peut être connecté à un noeud 40 du réseau, par exemple un noeud SSF d'un réseau intelligent. Les autres éléments peuvent être identiques aux éléments correspondants de la figure 1.

Dans ce mode de réalisation, le service peut aussi être réalisé par déviation des appels au niveau du réseau téléphonique classique ou par déviation des appels vers un autre réseau de type VoIP. L'utilisateur n'a plus besoin d'installer un boitier chez lui et l'interaction s'effectue par un accès web ou par avec une application logicielle sur le smartphone. Le service peut être géré par des opérateurs téléphoniques ou des opérateurs de service voix, réseaux sociaux, etc.

Dans l'exemple de la figure 4, le dispositif terminal 2 de l'appelé est connecté au serveur 5 via une liaison de type Internet, afin de permettre à l'appelé par exemple de signaler des appels indésirables. Les autres éléments peuvent être identiques aux éléments correspondants de la figure 1 ou de la figure 3.

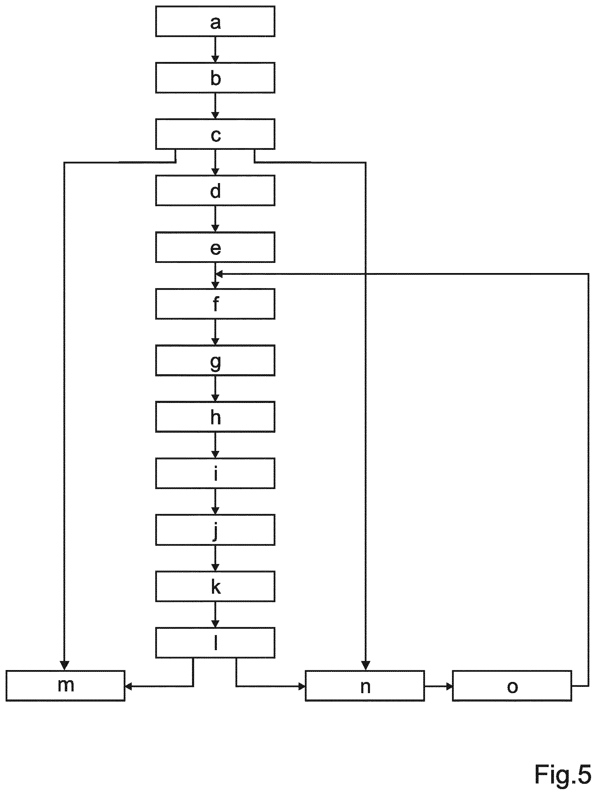

Nous allons maintenant décrite en relation avec la figure 5 un exemple de procédé mis en oeuvre par le système de filtrage 1,5 selon l'invention.

Au cours de l'étape a, un appel téléphonique provenant du réseau téléphonique 4 est reçu, et le numéro d'appelant (CLI - Caller Line Identity) est déterminé, par exemple dans le dispositif (ou application) 1 s'il est présent, ou dans le serveur 5 dans les modes de réalisation des figures 3 et 4. L'appel est intercepté et n'est pas immédiatement transmis au dispositif terminal 2, qui ne sonne donc pas encore.

Au cours de l'étape b, le numéro d'appelant ainsi déterminé est analysé. Cette analyse peut par exemple comporter une comparaison avec une liste de numéro d'appelant dans une liste noire de numéros d'appelants indésirables, et/ou une comparaison avec une liste de numéro d'appelant dans une liste blanche de numéros d'appelants.

La comparaison peut être effectuée avec des listes blanches et/ou noires individuelles à l'appelé, qui peuvent par exemple être stockées localement dans son dispositif 1 ou dans un espace mémoire dédié du serveur 5 ; ces listes locales contiennent par exemple des numéros qui sont indésirables (respectivement acceptables) pour un appelé donné mais qui ne le sont pas nécessairement pour un autre appelé. En addition, ou alternativement, la comparaison peut être effectuée avec des listes blanches et/ou noires qui peuvent être stockées de manière centralisée dans le serveur 5 et qui contiennent des numéros d'appelants indésirables (respectivement acceptables) pour tous ou la plupart des appelés. Des mécanismes de synchronisation peuvent être mis en place pour synchroniser les listes locales et les listes centralisées ; par exemple, un numéro d'appelant marqué comme indésirable dans un nombre supérieur à un seuil prédéterminé de dispositifs 1, ou dans un pourcentage prédéterminé de dispositifs 1, pourra être incorporé automatiquement dans une liste centralisée dans le serveur 5.

L'analyse de numéro d'appelant effectuée au cours de l'étape b peut aussi inclure une analyse de plausibilité du numéro d'appelant, par exemple afin d'exclure des numéros dont le format, le nombre de chiffres ou l'indicatif ne correspond pas un numéro possible, ou correspond à un numéro dans une tranche de numéros interdits.

L'analyse de numéro d'appelant effectuée au cours de l'étape b peut inclure une vérification de l'historique des appels passés depuis ce numéro, qui sont stockés dans le serveur 5 ; ainsi un numéro d'appelant associés à des appels fréquents durant un intervalle bref aura une probabilité plus d'élevée d'être classé comme indésirable qu'un numéro d'appelant utilisé de façon plus conventionnelle.

L'analyse de numéro d'appelant effectuée au cours de l'étape b peut aussi inclure la recherche de ce numéro d'appelant dans des annuaires téléphoniques, sur le web, par exemple au moyen de moteurs de recherche, dans un réseau social comme Facebook, Twitter, Linkedln etc, dans un site de chat, etc et la recherche d'un profil associé à ce numéro dans ces différentes sources. Ces profils, par exemple un nom d'entreprise, une activité d'entreprise, une localisation géographique, sont ensuite utilisés pour calculer un score ou une probabilité d'appel indésirable. Il est aussi possible de vérifier si une de ces entreprises ou activité fait partie d'une liste blanche ou d'une liste noire d'entreprises ou d'activités, par exemple s'il s'agit d'une entreprise connue pour générer des spams téléphoniques. Le score attribué à chaque entreprise, à chaque activité ou à chaque emplacement géographique peut être individuel pour chaque appelé. Un appelé actif dans un domaine d'activité donné, ou vivant dans un emplacement géographique donné, a en effet plus de probabilité de recevoir des appels d'entreprises dans ce domaine ou proches de cet emplacement qu'un appelant actif dans un autre domaine ou emplacement. Il est aussi possible d'utiliser un algorithme d'apprentissage automatique, basé sur le comportement passé d'un appelé, par exemple sur les appels acceptés, sur leur durée, sur les appels marqués comme indésirables, afin de calculer le score individuel pour cet appelé.

Un numéro d'appelant associé à une entreprise, ou un type d'entreprise, connue pour son harcèlement téléphonique, sera ainsi associé à une probabilité élevée d'être indésirable. Un appelé particulier peut aussi décider de bloquer par exemple tous les appels entrants dont le numéro est associé dans un annuaire ou sur le Web à des compagnies d'assurances.

L'analyse de numéro d'appelant peut aussi recourir à une entité de certification externe et spécialisée, par exemple une PKI (« public-key infrastructure ») capable de certifier certains numéros d'appelants

Au cours de l'étape c (optionnelle), un score est attribué à l'appel en fonction des résultats de l'analyse de numéro d'appelant effectuée au cours de l'étape b. Ce score est lié à la probabilité que l'appel soit indésirable pour l'appelé 2 donné.

Si le score est inférieur à un premier seuil donné, l'appel entrant est bloqué (étape m) ; en option, un message vocal préenregistré ou généré synthétiquement peut être restitué à l'appelant 3 pour lui indiquer que l'appel est refusé. Si en revanche ce score est supérieur à un deuxième seuil donné (supérieur au premier seuil), l'appel est transmis au dispositif 2 (étape n) qui se met à sonner (ou à vibrer), afin que l'appelé puisse répondre. Ces appels sûrs sont donc établis de manière entièrement transparente pour l'appelant et pour l'appelé.

Dans le cas où le score est entre le premier seuil et le deuxième seuil, une procédure particulière est mise en place, et illustrée par les étapes d à l sur la figure. Ces étapes sont donc effectuées lorsque l'analyse du numéro d'appelant ne permet pas à elle seule de classifier l'appel comme appel désirable ou comme appel à accepter sans condition, par exemple en cas de numéro d'appel inconnu ou pour lequel aucune information n'est disponible.

Les niveaux de seuils 1 et 2 peuvent en option être ajustés par l'utilisateur afin d'ajuster le taux de faux positifs et de faux négatifs.

Au cours de l'étape d, l'appelant est invité à parler, par exemple au moyen d'une invite vocale synthétisée par le dispositif 1 respectivement par le serveur 5. L'appelant peut par exemple être invité à indiquer son nom et le nom de la personne souhaitée. L'invitation peut être restituée de manière à ce que l'appelant ne puisse que difficilement se rendre compte qu'il parle à une machine de dialogue vocal.

Dans une variante, l'appel est interrompu avant l'étape d. Le système établit ensuite une communication dans l'autre sens, c'est-à-dire en rappelant l'appelant avec le numéro d'appelant indiqué, et l'invite à parler. Cette variante est plus contraignante, mais elle offre une sécurité supplémentaire en permettant de vérifier le numéro d'appelant indiqué.

Au cours de l'étape e, l'appelant répond au système de filtrage 1, 5, par exemple en indiquant son nom et la personne désirée.

Au cours de l'étape f, la voix de l'appelant est analysée par le système de filtrage 1 respectivement 5. Le but de cette analyse est de classer l'appelant comme personne indésirable ou non. Un extrait vocal de moins de 30 secondes est généralement suffisant.

En cas de communication multimodale, par exemple de communication incluant l'image en plus de la voix, il est possible en option d'analyser également l'image de l'appelant, et d'effectuer une analyse faciale. D'autres paramètres biométriques peuvent être employés en sus de la voix, y compris par exemple les empreintes digitales si disponibles.

Au cours de l'étape g (optionnelle), une analyse sémantique de la voix de l'appelant est effectuée, par exemple sur la base d'une conversion voix en texte des mots dits par l'appelant. L'empreinte sémantique dépend de l'ensemble des couches du langage : le discours, la pragmatique, la sémantique, la syntaxe, le niveau lexical. Il est par exemple possible de détecter des phrases spécifiques, des mots ou des tournures de phrases que l'on trouve plus fréquemment dans des appels indésirables.

Au cours de cette étape g, d'autres informations peuvent être extraites du signal audio reçu de l'appelant. Par exemple, de nombreux appels indésirables sont générés depuis des centrales d'appels qui génèrent des signaux sonores caractéristiques, par exemple des bips sonores ou d'autres signaux générés par la centrale. Certains opérateurs dans des centrales d'appel travaillent en musique ; il arrive aussi qu'une introduction musicale soit jouée en introduction au début de l'appel. Le bruit de fond, qui est d'habitude écarté par les algorithmes de reconnaissance de voix ou de locuteur, peut être très intéressant parce qu'il permet d'identifier un endroit, par exemple un central d'appel. Des systèmes de reconnaissance vocaux peuvent par exemple être entraînés spécifiquement pour reconnaitre le bruit de fond dans certains centraux d'appels, et/ou les signaux sonores spécifiques émis par certains centraux. Les échos émis dans la salle d'appel sont également caractéristiques et dépendent de la géométrie de la pièce. Il est donc possible de classifier le bruit de fond et/ou les échos durant un appel pour déterminer s'il provient d'une centrale d'appel, ou d'une centrale d'appel spécifique. Par ailleurs, certains opérateurs utilisent des voix synthétiques ou des extraits vocaux préenregistrés au début de l'appel, afin de réduire la charge de travail des opérateurs. Ces extraits peuvent être reconnus. Un module de détection de voix synthétique, par exemple un module basé sur la mesure de rythme de la voix, peut être utilisé. Ces paramètres constituent, individuellement ou en combinaison, une empreinte acoustique de l'appelant. Ils peuvent être utilisés pour déterminer un score ou une probabilité d'appel indésirable.

Au cours de l'étape h (optionnelle), l'appelant est modélisé sur la base de sa voix et de cette analyse sémantique. Cette étape permet d'une part de créer une signature vocale de l'appelant, afin de le reconnaitre lors d'appels ultérieurs, et d'autre part de le comparer à des modèles préexistants d'utilisateurs indésirables et d'utilisateurs acceptables. Cette modélisation peut par exemple inclure une détection de la langue parlée par l'appelant ; il est ainsi possible d'associer un score dépendant de cette langue. Le modèle peut aussi indiquer des caractéristiques émotionnelles de l'appelant (par exemple un état de stress, un ton agressif, un langage commercial, etc.). Le modèle peut encore inclure une détermination de l'âge approximatif de l'appelant, et de son sexe. L'ensemble de ces paramètres du modèle peuvent être utilisés pour calculer plus tard, au cours de l'étape k, un score attribué à l'appelant et lié à la probabilité que cet appelant soit indésirable.

Au cours de l'étape i, l'appelant est identifié sur la base de l'analyse vocale. L'identification peut utiliser des algorithmes de reconnaissance de locuteur (« speaker récognition ») et/ou des algorithmes de reconnaissance vocale pour identifier l'appelant sur la base de ses paroles.

L'identification correspond à une détermination de l'identité de l'appelant, par exemple sous la forme d'un identifiant unique telle qu'un nom, un numéro, etc. L'identification peut exploiter le numéro d'appelant préalablement déterminée au cours de l'étape a ; toutefois, plusieurs appelants peuvent partager un même numéro d'appelant, et un appelant peut employer différents numéros d'appelants à différentes occasions. Cette identification d'appelant permet donc par exemple de distinguer entre les différents membres d'une famille ou d'une entreprise employant la même ligne téléphonique et le même numéro d'appelant.

Alternativement, ou en addition, l'étape i peut aussi inclure une authentification (ou vérification) de l'appelant afin de vérifier s'il correspond bien au numéro d'appelant indiqué, à l'identité prétendue dans sa réponse vocale, et/ou à un groupe d'appelant prétendu. Par exemple, l'authentification peut consister à vérifier si la signature vocale et/ou faciale de l'appelant appartient au groupe d'utilisateurs qui partagent un numéro d'appelant ou un groupe de numéros d'appelants. Dans une option, l'algorithme modélise de manière combinée (reconnaissance multimodale des locuteurs) en utilisant, par exemple, la cohérence de la représentation 3D du visage avec les visèmes de la parole prononcée.

Alternativement, ou en addition, l'étape i peut aussi inclure une classification de l'appelant parmi des groupes d'appelants prédéterminés. Cette classification peut se baser par exemple sur des modèles de groupes d'appelants prédéterminés. Dans un mode de réalisation, au moins un premier modèle est établi pour modéliser les appelants indésirables et au moins un deuxième modèle est établi pour modéliser les appelants acceptés. La classification peut alors impliquer un calcul de la distance entre le modèle d'appelant déterminé au cours de l'étape h et ces deux modèles d'appelants prédéterminés, afin de classer le nouvel appelant dans l'une ou l'autre classe.

La classification peut aussi impliquer une classification dans un groupe d'inconnus, c'est-à-dire un groupe réunissant tous les locuteurs en-dehors du set de N identifiants des appelants connus par le système.

Des technologies d'apprentissages automatiques *Machine Learning* connues peuvent être utilisées pour cette classification (*GMM, Bayesian network*, *Support Vector Machine*)*,* en utilisant aussi bien des paramètres biométriques que textuels/sémantiques.

Des algorithmes de modélisation biométrique indépendants du texte prononcé et qui ne permettent pas de connaitre le contenu du texte peuvent aussi être utilisés, par exemple dans une approche respectueuse de la vie privée et afin d'éviter une analyse du contenu des conversations. Les approches dépendantes du texte et impliquant une conversion voix en texte ont cependant en général une fiabilité supérieure.

Des données associées à l'appelant préalablement identifié peuvent être vérifiées au cours de l'étape j optionnelle. Par exemple, des données associées à cet appelant et stockées dans le dispositif 1, dans le serveur 5 ou dans des bases de données ou des sites web externes peuvent être exploitées. Dans un mode de réalisation, des données relatives à cet appelant sont extraites d'annuaires ou de réseaux sociaux et peuvent être utilisées pour attribuer au cours de l'étape l un score à cet appelant.

Au cours de l'étape k optionnelle, des données associées à l'appelé peuvent être vérifiées, par exemple des données introduites à cet effet par l'appelé lui-même dans le dispositif 1, dans le serveur 5, dans un site web dédié, sur un site de réseau social, un site de chat, etc Ces données peuvent par exemple inclure des listes d'appelés refusés, des caractéristiques d'appelés refusés (par exemple en fonction de la langue, de l'âge, du sexe, etc.), ou des points d'intérêts ou des caractéristiques de l'appelé. Il est ainsi possible de vérifier une éventuelle corrélation entre ces données propres à l'appelé et les données propres à l'appelant, ainsi que le contenu sémantique des paroles parlées par l'appelant.

Au cours de l'étape l, (optionnelle), un score est attribué à l'appelant en fonction des résultats des étapes f à k. Ce score est lié à la probabilité que l'appelant soit indésirable pour l'appelé 2 donné. Il peut être combiné au score de numéro d'appel déterminé au cours de l'étape c afin de calculer un score combiné.

Si le score est inférieur à un troisième seuil donné, l'appel entrant est bloqué (étape m) ; en option, un message vocal préenregistré ou généré synthétiquement peut être restitué à l'appelant 3 pour lui indiquer que l'appel est refusé. Si en revanche ce score est supérieur à un quatrième seuil donné (supérieur au premier seuil), l'appel est transmis au dispositif terminal 2 (étape n) qui se met à sonner (ou à vibrer), afin que l'appelé puisse répondre.

Lorsque l'appel est établi au cours de l'étape n, l'appelant et l'appelé peuvent converser normalement. L'appelé peut cependant signaler en tout temps, au cours de l'étape o, que l'appelant est indésirable, par exemple en appuyant sur un bouton sur le module 1, par une commande vocale, etc. Dans ce cas, l'appel est interrompu et le numéro d'appelant, ainsi que la signature vocale ou biométrique de l'appelant, sont enregistrées comme indésirables dans la liste noire personnelle de l'appelé.

Au cours du dialogue entre l'appelant et l'appelé, l'analyse vocale et sémantique des paroles de l'appelant se poursuit (étapes f à l), et le score est recalculé en permanence ; la conversation peut ainsi être interrompue automatiquement par le système 1, 5 si ce score descend au-dessous d'une valeur donnée. Dans une variante, le système de filtrage propose seulement à l'appelé d'interrompre la conversation, par exemple au moyen d'un message visuel affiché sur un smartphone ou sur un écran du module 1, ou d'un message vocal restitué. La décision d'interrompre la conversation, ou de proposer une telle interruption, peut aussi dépendre d'une analyse des émotions dans la voix de l'appelant et/ou de l'appelé, et d'une analyse sémantique du dialogue.

Cette analyse à la volée, au cours de la conversation, permet aussi d'améliorer le modèle vocal et sémantique des appelants.

Dans le cas où le dispositif terminal 2 est constitué par un smartphone, une tablette ou un ordinateur, la confiance que le système place dans l'appel ou dans l'authenticité de la conversation peut être visualisée en permanence sur l'écran ou en faisant appels aux fonctionnalités du système utilisé (vibreur, notification sonore, ...)

Dans le cas d'une communication asymétrique smartphone vers téléphone, les paramètres biométriques de l'appelant peuvent tout de même inclurent la modélisation visuelle de l'appelant effectuée sur le smartphone. Les paramètres sont alors transmis par une autre connexion réseau vers le système de filtrage 1, 5.

Le système offre en outre l'avantage de sauvegarder les données biométriques de l'appelant, par exemple son empreinte vocale et/ou faciale. Les auteurs d'appels criminels ou indésirables laissant leurs traces biométriques derrière eux, ces données peuvent être partagées avec les autres membres de la communauté d'utilisateurs du système, ou avec la police. Le système biométrique peut ainsi bénéficier et modéliser ces personnes.

Nous allons maintenant décrire un exemple de dialogue dans un système selon l'invention. Le système fait appel à un dispositif qui se présente sous le nom de Katia. Dans ce scénario, l'appelant 3 est Alice et l'appelé 2 est Bob.

Dans cet exemple, le dialogue est initié par Alice qui compose le numéro de l'appelé Bob. Bob a installé un boîtier de filtrage « Katia » 1 entre son terminal 2 et le réseau téléphonique 4, qui intercepte cet appel entrant. Alternativement, Bob a installé une application dans son smartphone qui intercepte cet appel entrant.

Le système 1, 5 détecte que le score associé au numéro est inférieur au premier seuil de confiance. Dans ce cas, le système décroche l'appel à la place de Bob et procède à un contrôle d'accès non transparent pour l'appelant. Plus précisément, le boîtier 1 décroche avec le message suivant: *Votre numéro n'est pas reconnu par Katia, la suite de la conversation sera enregistrée, si vous ne désirez pas être enregistré raccrocher maintenant. Katia vous écoute* !

Un tel message a souvent déjà pour effet de dissuader les appelants indésirables ou criminels s'ils apprennent que leur appel est enregistré.

Alice répond avec la phrase : *Bonjour Katia, je t'appelle depuis New York. J'ai besoin de l'aide de Bob, peux-tu me le passer ?*

Le système 1, 5 reconnait Alice grâce à l'empreinte vocale stockée et aussi grâce à l'empreinte sémantique créée par la page Facebook où Alice avait décrit son voyage à New York. Avec un résultat favorable du calcul de probabilité (score du numéro d'appel combiné avec les probabilités qui résultent de la vérification des empreintes), le système accorde l'accès et fait sonner le téléphone de Bob. Une musique d'attente est restituée à Alice en attendant que Bob réponde.

L'accès est ensuite accordé par Bob qui décroche. Dans un mode de réalisation préférentiel, Bob a écouté le message d'Alice qui lui est restitué, ce qui permet un filtrage manuel par Bob. Bob peut communiquer au dispositif 1 sa décision de prendre l'appel par exemple avec une commande vocale du type « Katia, je prends l'appel ». La communication est alors établie entre Alice et Bob.

Alice parle alors à Bob. Dans cet exemple, elle demande « Bonjour Bob, peux-tu m'envoyer de l'argent sur mon compte ? C'est urgent ! ». Le système 1, 5 enregistre la conversation et segmente le discours de chaque locuteur. L'empreinte sémantique d'Alice est analysée en continu pour vérifier le spam. Bob répond et la conversation se poursuit.

Alice termine ensuite son appel. Le système de filtrage 1, 5 met à jour les modèles vocaux, biométriques et sémantiques de l'appelant Alice.

La présente invention concerne aussi un support de données informatique tangible contenant un programme qui peut être exécuté par un système informatique 1, 5 pour exécuter tout ou partie du procédé ci-dessus.

## Revendications

1. Procédé de filtrage d'appels téléphoniques entrants indésirables, dans lequel une décision de bloquer un appel ou de le transmettre est basée à la fois sur le numéro d'appelant et sur une analyse de la voix de l'appelant, le procédé comportant les étapes suivantes :
a) détermination du numéro d'appelant;
b) en fonction du numéro d'appelant, un système de filtrage (1, 5) décide soit de transmettre l'appel, soit de rejeter l'appel, soit d'inviter l'appelant (3) à parler ;
e) lorsque l'appelant (3) est invité à parler, il parle sans que son message vocal ne soit restitué à l'appelé ;
f) le système de filtrage analyse la voix de l'appelant (3);
l) le système de filtrage décide en fonction de cette analyse si l'appel doit être transmis à l'appelé (2), ou s'il doit être bloqué,
**caractérisé en ce que** le système de filtrage continue d'analyser la voix de l'appelant (3) après que l'appel ait été transmis à l'appelé (2), et bloque l'appel ou propose de le bloquer lorsque cette analyse révèle, après l'établissement de l'appel avec l'appelé (2), que l'appel est indésirable.

2. Procédé selon la revendication 1, dans lequel la décision de bloquer un appel ou de le transmettre au cours de l'étape l) est en outre basée sur une analyse du visage de l'appelant (3).

3. Procédé selon l'une des revendications 1 à 2, dans lequel ledit système de filtrage peut, au cours de l'étape b, également décider de rappeler l'appelant (3) afin de vérifier son numéro et de l'inviter à parler.

4. Procédé selon l'une des revendications 1 à 3, comprenant une étape (c) au cours de laquelle un score de confiance est attribué en fonction du numéro d'appelant, la décision de rejeter l'appel ou d'inviter l'appelant (3) à parler étant prise au cours de l'étape b lorsque ce score est en-dessous d'un seuil prédéterminé.

5. Procédé selon la revendication 4, dans lequel ledit score de confiance attribué à un appelant (3) est déterminé indépendamment pour chaque appelé.

6. Procédé selon l'une des revendications 4 ou 5, dans lequel ledit score de confiance, ou un autre score de confiance, est attribué à chaque appelant (3) en fonction de ladite analyse de voix.

7. Procédé selon l'une des revendications 4 à 6, dans lequel ladite décision de rejeter l'appel ou d'inviter l'appelant (3) à parler dépend de l'historique des appels effectués avec ledit numéro d'appelant vers d'autres appelés.

8. Procédé selon l'une des revendications 4 à 7, comprenant une étape (i) d'identification dudit appelant (3) grâce à ladite analyse vocale, le score de confiance dépendant de l'historique des appels effectués par ledit appelant (3) ainsi identifié vers d'autres appelés.

9. Procédé selon l'une des revendications 4 à 8, comprenant une étape (i) d'authentification dudit appelant (3) grâce à ladite analyse vocale et de vérification que ladite authentification corresponde au numéro d'appelant.

10. Procédé selon l'une des revendications 4 à 9, comprenant une étape (j ; k) de vérification d'un profil d'appelant dans un annuaire, sur le web et/ou dans un réseau social, ladite décision de rejeter l'appel ou d'inviter l'appelant (3) à parler dépendant de ces données.

11. Procédé selon l'une des revendications 1 et 4 à 10, comprenant une étape (o) au cours de laquelle l'appelé (2) signale un appel indésirable, cette indication étant ensuite utilisée dans la décision de rejeter les futurs appels de l'appelant (3) vers d'autres appelés, ou d'inviter cet appelant (3) à parler.

12. Procédé selon l'une des revendications 1 et 4 à 11, comprenant une étape (g) d'analyse sémantique de la conversation, la décision de transmettre un appel ou la décision de bloquer un appel dépendant de cette analyse sémantique.

13. Procédé selon la revendication 12, la décision de transmettre un appel ou la décision de bloquer un appel en fonction de l'analyse sémantique dépendant de chaque appelé (2).

14. Procédé selon l'une des revendications 1 et 4 à 11, comprenant une étape (g) d'analyse du bruit de fond, des échos, de la musique et/ou des signaux sonores émis par l'appelant (3), la décision de transmettre un appel ou la décision de bloquer un appel dépendant de cette analyse.

15. Procédé selon l'une des revendications 1 et 4 à 14, comprenant une étape (h) de modélisation des appelants autorisés, ainsi qu'une étape de modélisation des appelants non autorisés.

16. Procédé selon l'une des revendications 1 et 4 à 15, dans lequel ladite décision de transmettre l'appel, de rejeter l'appel, ou d'inviter l'appelant (3) à parler est basée sur un procédé de machine learning

17. Procédé selon l'une des revendications 1 à 16, dans lequel ledit système de filtrage (1) effectue une analyse de plausibilité du numéro d'appelant et tient compte de cette analyse de plausibilité dans sa décision soit de transmettre l'appel, soit de rejeter l'appel, soit d'inviter l'appelant (3) à parler.

18. Système de filtrage d'appels téléphoniques entrants indésirables, comportant :
un module de détermination du numéro d'appelant;
un système de filtrage (1, 5) apte à décider, en fonction du numéro d'appelant, si l'appel doit être transmis, rejeté, ou si l'appelant (3) doit être invité à parler ;
un module d'analyse de la voix de l'appelant (3);
le système de filtrage étant en outre agencé pour décider en fonction de cette analyse si l'appel doit être transmis à l'appelé, ou s'il doit être bloqué, **caractérisé en ce que** le système de filtrage est en outre agencé pour continuer à analyser la voix de l'appelant (3) après que l'appel ait été transmis à l'appelé (2), et pour bloquer l'appel ou proposer de le bloquer lorsque cette analyse révèle, après l'établissement de l'appel avec l'appelé, que l'appel est indésirable.

## Patentansprüche

1. Verfahren zum Filtern unerwünschter eingehender Telefonanrufe, worin eine Entscheidung, einen Anruf zu blockieren oder weiterzuleiten, sowohl auf der Nummer des anrufenden Teilnehmers als auch auf einer Sprachanalyse des Anrufers basiert, wobei das Verfahren die folgenden Schritte umfasst:
a) Bestimmen der Rufnummer;
b) je nach Nummer des anrufenden Teilnehmers entscheidet ein Filtersystem (1, 5), ob der Anruf weitergeleitet wird, der Anruf abgelehnt wird oder ob der Anrufer (3) zum Sprechen aufgefordert wird;
e) wenn der Anrufer (3) zum Sprechen aufgefordert wird, spricht er, ohne dass seine Sprachnachricht an den angerufenen Teilnehmer wiedergegeben wird;
f) das Filtersystem analysiert die Stimme des Anrufers;
I) das Filtersystem entscheidet aufgrund dieser Analyse, ob der Anruf an den angerufenen Teilnehmer (2) weiterzuleiten ist oder ob er zu blockieren ist,
**dadurch gekennzeichnet, dass** das Filtersystem die Analyse der Stimme des Anrufers (3) weiterführt, nachdem der Anruf an den angerufenen Teilnehmer (2) weitergeleitet wurde, und den Anruf blockiert oder vorschlägt, ihn zu blockieren, wenn diese Analyse aufzeigt, nach Herstellung der Verbindung mit dem angerufenen Teilnehmer (2), dass der Anruf unerwünscht ist.

2. Verfahren gemäss Anspruch 1, worin die Entscheidung, einen Anruf zu blockieren oder weiterzuleiten während Schritt l), zudem auf einer Gesichtsanalyse des Anrufers (3) basiert.

3. Verfahren gemäss einem der Ansprüche 1 bis 2, worin das besagte Filtersystem kann, während des Schrittes b), auch entscheiden kann, den Anrufer (3) zurückzurufen, um seine Nummer zu überprüfen und ihn zum Sprechen aufzufordern.

4. Verfahren gemäss einem der Ansprüche 1 bis 3, mit einem Schritt (c), während dessen ein Vertrauenswert entsprechend der Nummer des Anrufers zugewiesen wird, wobei die Entscheidung, den Anruf abzulehnen oder den Anrufer (3) zum Sprechen aufzufordern, während Schritt b ausgeführt wird, wenn dieser Wert unter einem vorbestimmten Schwellenwert liegt.

5. Verfahren gemäss Anspruch 4, worin der besagte einem Anrufer (3) zugewiesene Vertrauenswert unabhängig für jeden angerufenen Teilnehmer bestimmt wird.

6. Verfahren gemäss einem der Ansprüche 4 oder 5, worin der besagte Vertrauenswert oder ein anderer Vertrauenswert jedem Anrufer (3) aufgrund der Sprachanalyse zugewiesen wird.

7. Verfahren gemäss einem der Ansprüche 4 bis 6, worin die besagte Entscheidung, den Anruf abzulehnen oder den Anrufer (3) zum Sprechen aufzufordern, von der Anrufhistorie, die mit der besagten Anrufer-Nummer zu anderen angerufenen Teilnehmern getätigt wird, abhängt.

8. Verfahren gemäss einem der Ansprüche 4 bis 7, mit einem Schritt (i) des Identifizierens des besagten Anrufers (3) dank der besagten Sprachanalyse, wobei der Vertrauenswert von der Anrufhistorie, die vom besagten somit identifizierten Anrufer (3) zu anderen angerufenen Teilnehmern getätigt wurde, abhängt.

9. Verfahren gemäss einem der Ansprüche 4 bis 8, mit einem Schritt (i) der Authentifizierung des besagten Anrufers (3) dank der besagten Sprachanalyse und der Verifizierung, dass die besagte Authentifizierung der Anrufer-Nummer entspricht.

10. Verfahren gemäss einem der Ansprüche 4 bis 9, mit einem Schritt (j; k) des Verifizierens eines Anrufer-Profils in einem Verzeichnis, auf dem Web und/oder in einem sozialen Netzwerk, wobei die besagte Entscheidung, den Anruf abzulehnen oder den Anrufer (3) zum Sprechen aufzufordern, von diesen Daten abhängt.

11. Verfahren gemäss einem der Ansprüche 1 und 4 bis 10, mit einem Schritt (o), während dessen der angerufene Teilnehmer (2) einen unerwünschten Anruf signalisiert, wobei diese Angabe dann bei der Entscheidung verwendet wird, die zukünftigen Anrufe des Anrufers (3) an andere angerufene Teilnehmer abzulehnen, oder um diesen Anrufer (3) zum Sprechen aufzufordern.

12. Verfahren gemäss einem der Ansprüche 1 und 4 bis 11, mit einem Schritt (g) der semantischen Analyse der Konversation, wobei die Entscheidung, einen Anruf zu übermitteln, oder die Entscheidung, einen Anruf zu blockieren, von dieser semantischen Analyse abhängt.

13. Verfahren gemäss Anspruch 12, wobei die Entscheidung, einen Anruf zu übermitteln, oder die Entscheidung, einen Anruf zu blockieren, von der semantischen Analyse von jedem angerufenen Teilnehmer (2) abhängt.

14. Verfahren gemäss einem der Ansprüche 1 und 4 bis 11, mit einem Schritt (g) der Analyse des Hintergrundlärms, der Echos, der Musik und/oder der akustischen Signale, die vom Anrufer (3) ausgesendet werden, wobei die Entscheidung, einen Anruf zu übermitteln, oder die Entscheidung, einen Anruf zu blockieren, von dieser Analyse abhängt.

15. Verfahren gemäss einem der Ansprüche 1 und 4 bis 14, mit einem Schritt (h) des Modellierens der autorisierten Anrufer sowie einem Schritt des Modellierens von nichtautorisierten Anrufern.

16. Verfahren gemäss einem der Ansprüche 1 und 4 bis 15, worin die besagte Entscheidung, den Anruf zu übermitteln, den Anruf abzulehnen oder den Anrufer (3) zum Sprechen aufzufordern, auf einem maschinellen Lernprozess basiert.

17. Verfahren gemäss einem der Ansprüche 1 bis 16, worin das besagte Filtersystem (1) eine Plausibilitätsanalyse der Anrufer-Nummer durchführt und diese Plausibilitätsanalyse bei seiner Entscheidung, entweder den Anruf zu übermitteln oder den Anruf abzulehnen oder den Anrufer (3) zum Sprechen aufzufordern, berücksichtigt.

18. System zum Filtern von unerwünschten eingehenden Telefonanrufen, umfassend:
ein Anrufer-Nummer-Ermittlungsmodul;
ein Filtersystem (1, 5), das in der Lage ist, aufgrund der Nummer des anrufenden Teilnehmers zu entscheiden, ob der Anruf weiterzuleiten ist, abzulehnen ist, oder ob der Anrufer (3) zum Sprechen aufzufordern ist;
ein Modul zur Analyse der Stimme des Anrufers (3);
wobei das Filtersystem ferner eingerichtet ist, um aufgrund dieser Analyse zu entscheiden, ob der Anruf zum angerufenen Teilnehmer übermittelt werden soll oder ob er blockiert werden muss, **dadurch gekennzeichnet, dass** das Filtersystem zudem angeordnet ist, um die Analyse der Stimme des Anrufers (3) weiterzuführen, nachdem der Anruf an den angerufenen Teilnehmer (2) weitergeleitet wurde, und um den Anruf zu blockieren oder vorzuschlagen, ihn zu blockieren, wenn diese Analyse aufzeigt, nach Erstellung des Anrufes mit dem angerufenen Teilnehmer (2), dass der Anruf unerwünscht ist.

## Claims

1. A process for filtering unwanted incoming telephone calls, in which a decision to block a call or to transmit it is based both on the calling party number and on an analysis of the voice of the calling party, the process having the following steps:
a) determination of the calling party number;
b) on the basis of the calling party number, a filtering system (1, 5) decides either to transmit the call, or to reject the call, or to ask the calling party (3) to speak;
e) when the calling party (3) is asked to speak, he speaks without his voice message being reproduced for the calling party;
f) the filtering system analyzes the voice of the calling party (3);
I) the filtering system takes this analysis as a basis for deciding whether the call needs to be transmitted to the called party (2), or whether it needs to be blocked,
**characterized in that** the filtering system continues to analyze the voice of the calling party (3) after the call has been transmitted to the called party (2) and blocks the call or proposes to block it when this analysis shows, after the call has been transmitted to the called party (2) that the call is unwanted.

2. The process according to claim 1, in which the decision to block a call or to transmit it in the course of step I) is moreover based on an analysis of the face of the calling party (3).

3. The process according to one of the claims 1 to 2, in which said filtering system can, in the course of step b, also decide to call back the calling party (3) in order to check his number and to ask him to speak.

4. The process according to one of the claims 1 to 3, comprising a step (c) in the course of which a confidence score is attributed on the basis of the calling party number, the decision to reject the call or to ask the calling party (3) to speak being taken in the course of step b) when this score is below a predetermined threshold.

5. The process according to claim 4, in which said confidence score attributed to a calling party (3) is determined independently for each called party.

6. The process according to one of the claims 4 or 5, in which said confidence score, or another confidence score, is attributed to each calling party (3) on the basis of said voice analysis.

7. The process according to claims 4 to 6, in which said decision to reject the call or to ask the calling party (3) to speak is dependent on the history of calls made with said calling party number to other called parties.

8. The process according to claims 4 to 7, comprising a step (i) of identification of said calling party (3) by courtesy of said voice analysis, the confidence score being dependent on the history of calls made by said calling party (3) identified in this manner to other called parties.

9. The process according to claims 4 to 8, comprising a step (i) of authentication of said calling party (3) courtesy of said voice analysis and of checking that said authentication corresponds to the calling party number.

10. The process according to claims 4 to 9, comprising a step (j ; k) of checking a calling party profile in a directory, on the web and/or in a social network, said decision to reject the call or to ask the calling party (3) to speak being dependent on these data.

11. The process according to claims 1 and 4 to 10, comprising a step (o) in the course of which the called party (2) signals an unwanted call, this indication then being used in the decision to reject future calls from the calling party (3) to other called parties, or to ask this calling party (3) to speak.

12. The process according to claims 1 and 4 to 11, comprising a step (g) of semantic analysis of the conversation, the decision to transmit a call or the decision to block a call being dependent on this semantic analysis.

13. The process according to claim 12, the decision to transmit a call or the decision to block a call on the basis of the semantic analysis being dependent on each called party (12).

14. The process according to one of the claims 1 and 4 to 11, comprising a step (g) of analysis of the background noise, of the echoes, of the music and/or of the sound signals transmitted by the calling party (3), the decision to transmit a call or the decision to block a call being dependent on this analysis.

15. The process according to claims 1 and 4 to 14, comprising a step (h) of modelling of the authorized calling parties, along with a step of modelling of the unauthorized calling parties.

16. The process according to claims 1 and 4 to 15, in which said decision to transmit the call, to reject the call, or to ask the calling party (3) to speak is based on a machine learning method.

17. The process according to claims 1 to 16, in which said filtering system (1) performs a plausibility analysis for the calling party number and takes this plausibility analysis into account in its decision either to transmit the call, or to reject the call, or to ask the calling party (3) to speak.

18. A process for filtering unwanted incoming telephone calls comprising:
a module for determining the calling party number;
a filtering system (1, 5) capable of deciding, on the basis of the calling party number, whether the call needs to be transmitted, rejected, or whether the calling party (3) needs to be asked to speak;
a module for analyzing the voice of the calling party (3);
the filtering system moreover being designed to take this analysis as a basis for deciding whether the call needs to be transmitted to the called party, or whether it needs to be blocked, **characterized in that** the filtering system is moreover designed to continue to analyze the calling party's (3) voice after the call has been transmitted to the called party (2), and to block the call or to propose to block it when this analysis shows, after establishing the call with the called party, that the call is unwanted.
